# DEMANDE DE BREVET EUROPEEN

(11) **EP 0 691 480 A1**
(43) Date de publication de la demande: **10.01.1996**
(21) Numéro de dépôt: 95401417.1
(22) Date de dépôt: 16.06.1995
(51) Int. Cl.: F16B 37/06

(54) **Pièce dans laquelle est serti un boulon**

(30) Priorité: 07.07.1994 FR 9408408
(71) Demandeur: OTALU S.A., F-73490 La Ravoire (FR)
(72) Inventeur: Gory, Philippe, F-73160 Saint-Thibaud de Couz (FR)
(74) Mandataire: Eidelsberg, Victor Albert

(57) **Abrégé**

L'invention concerne une pièce ayant une face définissant une fraisure tronconique, dans laquelle est serti un écrou formé d'un fût (1,3,4) terminé par une tête (2) ayant une face (7) latérale tronconique. A la face (7) latérale de la tête (2) fait suite, du côté du fût (1,3,4), une face (8) intérieure de la tête perpendiculaire à l'axe (XX') de l'écrou.

Application notamment aux assemblages de pièces.

## Description

La présente invention se rapporte aux pièces ayant une face définissant une fraisure traversante, au moins en partie tronconique, dans laquelle est serti un écrou. Cet écrou a un axe de symétrie et est formé d'un fût terminé par une tête de plus grand diamètre que le fût. La tête a une face tronconique en contact avec la face définissant la fraisure et de même conicité que celle-ci. Une pièce de ce genre peut être ainsi maintenue en place par l'écrou sur une autre pièce, ou l'écrou ainsi serti peut servir à recevoir une vis rapportée. Des assemblages de ce genre sont très courants dans l'industrie automobile, en électroménager, dans l'industrie aéronautique, dans l'industrie navale, dans les armoires électriques et dans bien d'autres applications.

On peut ainsi obtenir un assemblage, dans lequel la tête est à affleurement avec la pièce ayant une face définissant la fraisure. Grâce à cela, une pièce rapportée vissée par une vis dans le taraudage de l'écrou sera en contact avec la pièce ayant une face définissant la fraisure, en sorte que les deux pièces peuvent moins se déplacer ou vibrer l'une par rapport à l'autre. La fraisure est obtenue par usinage ou emboutissage. Mais il arrive qu'on ne puisse pas ménager correctement ou économiquement une fraisure dans certaines pièces, comme par exemple dans une tôle en inox ou dans des tôles en acier très dur. On y renonce alors et on accepte que la tête de l'écrou dépasse de la pièce ayant une face définissant non pas une fraisure au moins en partie tronconique, mais simplement un trou normalement cylindrique. L'utilisateur d'assemblages de ce genre est donc tenu d'avoir en stock deux sortes d'écrous, l'un à tête fraisée et l'autre à tête plate, c'est-à-dire à tête dont la face inférieure est perpendiculaire à l'axe de symétrie de l'écrou. Le fabricant doit de même fabriquer et tenir en stock ces deux types d'écrou.

L'invention pallie cet inconvénient en permettant à l'utilisateur et au fabricant de n'utiliser qu'un seul et même type de produit tant pour une pièce ayant une face définissant une fraisure traversante tronconique que pour une pièce dans laquelle on a simplement pratiqué un trou cylindrique.

Suivant l'invention, à la face latérale tronconique de la tête fait suite, du côté du fût, une face intérieure de la tête perpendiculaire à l'axe de l'écrou.

Lorsque l'on utilise l'écrou dans une pièce ayant une fraisure traversante tronconique, la face latérale tronconique de la tête permet à l'écrou d'être en appui dans la fraisure et d'obtenir la fixation souhaitée. Si, en revanche, il n'y a pas de fraisure tronconique, mais un simple trou traversant dans la pièce, c'est la face intérieure de la tête qui est perpendiculaire à l'axe de l'écrou, qui sert alors de face de contact. Ces deux faces, à savoir la face latérale tronconique d'une part et la face intérieure d'autre part jouent, suivant les cas, un rôle analogue sans que la présence de l'une ou de l'autre soit néfaste lorsque son rôle est inutile. On peut donc s'en accommoder. On notera en particulier que, dans le cas où c'est la face intérieure qui sert de face d'appui, l'espace dégagé par la face latérale tronconique se trouve entre les deux pièces assemblées, de sorte qu'on ne peut s'y accrocher alors que ce ne serait pas le cas si l'on avait donné la conformation suivant l'invention à la tête d'une vis.

Pour avoir une forme circulaire régulière plus facile à fabriquer, sans risque de bavures, il est recommandé qu'à la face latérale tronconique de la tête fasse suite, du côté éloigné du fût, une face latérale cylindrique.

Pour augmenter la résistance à la rotation, il est prévu des crantages radiaux issus de la face intérieure de la tête. De préférence, la largeur du crantage à sa naissance est inférieure à la moitié de la dimension radiale de la face intérieure de manière à empêcher que la tête ne reste soulevée sur des tôles très dures.

Aux dessins annexés, donnés uniquement à titre d'exemple :
- la figure 1 est une vue en élévation de l'écrou qui est serti dans la pièce suivant l'invention;
- la figure 2 est une vue partiellement en coupe de la pièce suivant l'invention;
- la figure 3 est une vue de détail de la partie entourée d'un cercle C à la figure 2; et
- la figure 4 illustre l'utilisation de l'écrou de la pièce représentée à la figure 2 dans un assemblage à trou non fraisé.

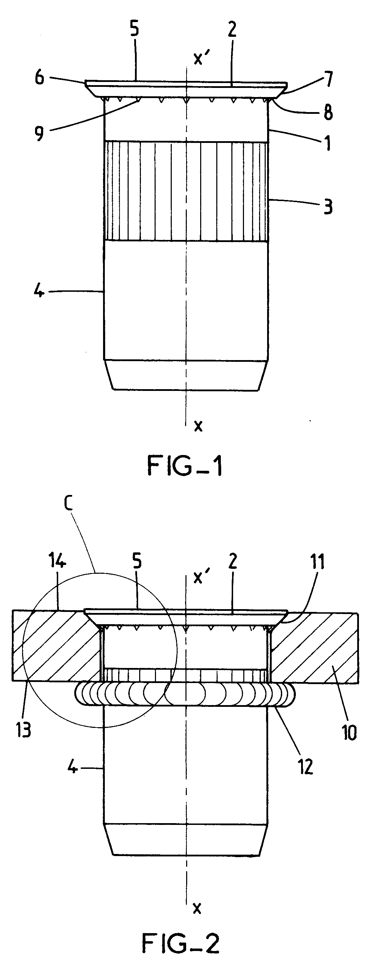

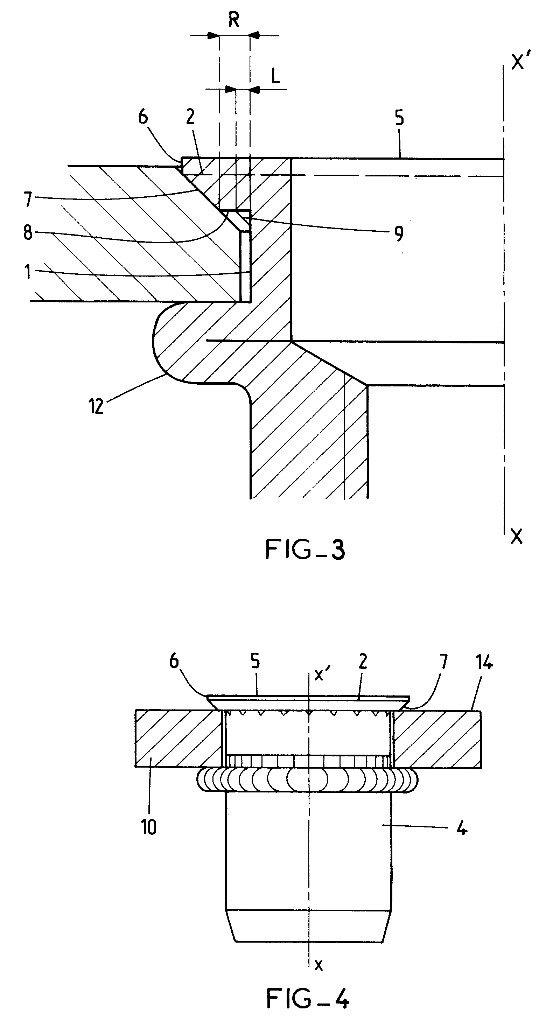

L'écrou représenté à la figure 1 est de symétrie par rapport à l'axe XX'. Il est formé d'un fût 1 terminé par une tête 2 de plus grand diamètre que le fût. Le fût 1 comporte un moletage 3 destiné à empêcher toute rotation et une partie 4 taraudée qui, tirée par un élément fileté, permettra aux parties 1 et 3 de se déformer en un bourrelet comme il est classique. La tête 2 comporte une face supérieure 5 perpendiculaire à l'axe XX', une face latérale 6 cylindrique, à laquelle fait suite une face latérale 7 tronconique. A cette face latérale 7 tronconique fait suite une face 8 intérieure de la tête perpendiculaire à l'axe XX'. Des crantages 9 radiaux sont issus de la face 8 intérieure de la tête, à la figure 3 la largeur L radiale du crantage à sa naissance sur la face 8 est inférieure à la moitié de la dimension radiale R de la face inférieure.

A la figure 2, l'écrou représenté à la figure 1 est serti dans une pièce 10 ayant une face 11 définissant une fraisure traversante en partie tronconique. Les parties 1 et 3 du fût ont été déformées en un bourrelet 12, qui vient s'appliquer sous la face inférieure 13 de la pièce 10 et la bloque. La tête 2 de l'écrou épouse la fraisure et dépasse très peu de la face 14 supérieure de la pièce 10.

En revanche, à la figure 4, l'écrou de la figure 1 est posé dans un simple trou cylindrique non fraisé. La tête 2 dépasse de la face 14 supérieure de la pièce 10. Une pièce de fixation non représentée est destinée à coiffer la tête 2, de sorte que l'espace compris entre la face 7 et la face 14 n'est pas accessible après l'assemblage et ne constitue pas un point d'accrochage.

## Revendications

1. Ensemble d'un écrou à sertir et d'une pièce ayant une face (11) définissant une fraisure traversante, au moins en partie tronconique, dans laquelle est serti l'écrou qui a un axe (XX') de symétrie et qui est formé d'un fût taraudé (1,3,4) terminé par une tête (2) de plus grand diamètre que le fût (1,3,4), la tête (2) ayant une face (7) latérale tronconique en contact avec la face (11) définissant la fraisure et de même conicité que celle-ci, caractérisé en ce qu'à la face (7) latérale tronconique de la tête (2) fait suite, du côté du fût (1,3,4), une face (8) intérieure de la tête (2) perpendiculaire à l'axe de l'écrou.

2. Ensemble d'un écrou à sertir et d'une pièce suivant la revendication 1, caractérisé en ce qu'à la face (7) latérale tronconique de la tête (2) fait suite, du côté éloigné du fût (1,3,4), une face (6) latérale cylindrique.

3. Ensemble d'un écrou à sertir et d'une pièce suivant la revendication 1 ou 2, caractérisé en ce qu'elle comporte des crantages (9) radiaux issus de la face (8) intérieure de la tête.

4. Ensemble d'un écrou à sertir et d'une pièce suivant la revendication 3, caractérisé en ce que la largeur (L) du crantage (9) à sa naissance est inférieure à la moitié de la dimension (R) radiale de la face (8) intérieure.
